# EUROPÄISCHE PATENTSCHRIFT

(11) **EP 1 135 842 B1**
(45) Veröffentlichungstag und Bekanntmachung des Hinweises auf die Patenterteilung: **02.10.2002**
(21) Anmeldenummer: 99959360.1
(22) Anmeldetag: 29.11.1999
(51) Int. Cl.: H02K 3/28

(54) **LEITERANORDNUNG MIT EINER MEHRZAHL VON ELEKTRISCHEN LEITERN ZUR STROMZUFÜHRUNG UND ZUR STROMABFÜHRUNG ZU EINER WICKLUNGSANORDNUNG**
CONDUCTOR ARRANGEMENT WITH A PLURALITY OF ELECTRICAL CONDUCTORS FOR CONVEYING POWER TO AND FROM A WINDING ARRANGEMENT
DISPOSITIF CONDUCTEUR DOTE DE PLUSIEURS CONDUCTEURS ELECTRIQUES DESTINE A L'ALIMENTATION EN COURANT ET AU TRANSPORT DE COURANT JUSQU'A UN DISPOSITIF A ENROULEMENTS

(30) Priorität: 02.12.1998 EP 98122902
(43) Veröffentlichungstag der Anmeldung: 26.09.2001
(73) Patentinhaber: SIEMENS AKTIENGESELLSCHAFT, 80333 München (DE)
(72) Erfinder: STEINBRINK, Jörn, D-30154 Hannover (DE)
(86) Internationale Anmeldenummer: EP9909270
(87) Internationale Veröffentlichungsnummer: WO00033442

(56) Entgegenhaltungen:
- DE-A- 3 202 958
- US-A- 4 132 914
- US-A- 4 200 817
- US-A- 4 315 179
- US-A- 4 336 474
- US-A- 4 404 486

## Beschreibung

Die Erfindung betrifft eine Leiteranordnung mit einer Mehrzahl von elektrischen Leitern, die zur Stromzuführung und zur Stromabführung zu einer mehrere Wicklungen aufweisenden Wicklungsanordnung einer elektrischen Maschine, insbesondere einer elektrischen Rotationsmaschine, dient.

Üblicherweise weist eine elektrische Rotationsmaschine, beispielsweise ein Generator, zumindest eine elektrische Wicklung - auch Strang genannt - auf. Bei einem Betrieb der Maschine wird die Wicklung mit einem elektrischen Strom beaufschlagt. Dazu ist eine Anordnung mit elektrischen Leitern zur Stromzuführung zur Wicklung und/oder zur Stromabführung von der Wicklung vorgesehen. Im Allgemeinen treten in den Leitern Verluste auf, die durch Stromverdrängung verursacht sind.

Eine elektrische Maschine, die als elektrische Rotationsmaschine ausgebildet ist, weist einen Stator mit einer Statorwicklung und einen Rotor mit einer Rotorwicklung auf. Je nach Ausführung der elektrischen Rotationsmaschine - als elektrischer Generator oder als elektrischer Motor - ist für die Statorwicklung und/oder die Rotorwicklung eine Anordnung zur Stromzuführung und/oder Stromabführung vorgesehen. In Sequenz, Heinrich: "Die Wicklungen elektrischer Maschinen", Bände 1 bis 4, 1954, Wien, Springer-Verlag sind eine Vielzahl von Ausführungsformen von elektrischen Rotationsmaschinen und insbesondere deren Wicklungen beschrieben.

In Giersch, Hans-Ulrich: "Elektrische Maschinen", 1982, Stuttgart, Teubner-Verlag, Seite 158, ist ein Wicklungsbild für elektrische Wicklungen einer elektrischen Rotationsmaschine dargestellt, die für einen Drehstrombetrieb mit drei Phasen U, V und W ausgeführt ist. Jede der Wicklungen weist einen Wicklungsanfang und ein Wicklungsende auf. Demgemäß sind die Wicklungsanfänge der Wicklungen mit U1, V1 und W1 und deren Wicklungsenden mit U2, V2, W2 bezeichnet. Wie eine Stromzuführung zu den Wicklungsanfängen oder eine Stromabführung von den Wicklungsenden erfolgt und ob dafür eine Anordnung mit Leitern vorgesehen ist, ist dem Wicklungsschema nicht entnehmbar.

In der US 4,132,914 sowie in der US 4,200,817 werden jeweils spezielle Wicklungsanordnungen beschrieben und Maßnahmen vorgeschlagen, wie die Spannungsdifferenz zwischen zwei benachbarten Wicklungen möglichst gering gehalten werden kann, um beispielsweise Überschläge zwischen benachbarten Wicklungen zu vermeiden.

Aus der US 4,315,179 und der US 4,336,474 sind Verbindungselemente für Wicklungsenden einer Wicklungsanordnung bekannt. Um die auf die Verbindungselemente wirkenden elektromagnetischen Kräfte gering zu halten, ist eine geeignete Phasenbeziehung der Ströme in benachbarten Verbindungselementen sowie eine Beabstandung der Verbindungselemente in axialer Richtung voneinander vorgesehen.

Die aufgeführten Dokumente betreffen allesamt Generatorwicklungen, sie befassen sich jedoch nicht mit einer Leiteranordnung zur Stromzu- und -abführung zu einer Wicklungsanordnung, und insbesondere beschäftigen sie sich nicht mit dem Problem einer Stromverdrängung in der Leiteranordnung.

Die Aufgabe der Erfindung ist es, für eine elektrische Maschine eine Leiteranordnung mit einer Mehrzahl von Leitern zur Stromzu- und -abführung zu einer Wicklungsanordnung anzugeben, in denen die Stromverdrängung gering ist.

Die Aufgabe wird gemäß der Erfindung gelöst durch eine Leiteranordnung mit einer Mehrzahl von elektrischen Leitern zur Stromzuführung und zur Stromabführung zu einer mehrere Wicklungen aufweisenden Wicklungsanordnung einer elektrischen Maschine, insbesondere Generator, wobei der Leiter zur Stromzuführung und der Leiter zur Stromabführung zu einer jeweiligen Wicklung ein Leiterpaar bilden und einander benachbart sind, so dass der Betrag der Differenz der Phasenwinkel der Stromzeiger dieses Leiterpaares möglichst groß ist, und insbesondere 180° beträgt.

Unter Leiterpaar wird im Folgenden immer die Kombination zweier Leiter zur Stromzu- und -abführung zu jeweils mindestens einer Wicklung verstanden.

Die Leiter des Leiterpaars sind also so angeordnet, dass beim Betrieb des Generators in einander benachbarten Leitern der Strom zu einer Wicklung zu- und abgeführt wird. Die in diesen Leitern fließenden Ströme weisen eine Phasenverschiebung von 180° zueinander auf. Dadurch wird die von diesem Leiterpaar ausgehende Beeinflussung der Stromdichteverteilungen in den anderen Leitern durch die von diesem Leiterpaar verursachten Magnetfelder verringert und damit eine Stromverdrängung in den anderen Leitern reduziert. Somit sind auch die Verluste in den Leitern aufgrund der Stromverdrängung gering und dadurch die Gefahr einer starken Erwärmung der Leiter und einer durch diese Erwärmung möglichen Beschädigung einer die Leiter umgebenden Isolierung verringert. In der Leiteranordnung tritt also eine relativ geringe Erwärmung auf. Dies ist insbesondere dann ein wesentlicher Vorteil, wenn diese Bauteile indirekt gekühlt werden. Zwar ist die Reduzierung der Verlustleistung durch die beschriebene Maßnahme im Vergleich zu der gesamten Verlustleistung vernachlässigbar, jedoch bewirkt die Reduzierung eine deutliche Absenkung der Bauteiltemperatur im Bereich der Leiteranordnung von beispielsweise 180°C auf 120°C und ermöglicht somit einen Betrieb in einem zulässigen Temperaturbereich ohne die Kühlmaßnahmen verstärken zu müssen.

Das Maß der auftretenden Stromverdrängung ist insbesondere abhängig von den jeweiligen Stromzeigern der jeweiligen sich in den Leitern ausbildenden Leiterströme. Unter einem Stromzeiger wird hier die zu einem sinusförmigen Leiterstrom gehörende transformierte Größe im komplexen Bereich zur komplexen Rechnung verstanden. Die Stromverdrängung wird weiterhin beeinflußt von den jeweiligen Leiterquerschnitten, der jeweiligen Leiterumfänge sowie der Beabstandung der Leiter voneinander.

Vorzugsweise sind die Leiter dabei so angeordnet, daß weitgehend jeder Summenstromzeiger, der durch Summierung der Stromzeiger der Leiterströme zweier direkt benachbarter Leiter gebildet wird, einen möglichst geringen Betrag aufweist. Der Betrag des Summenstromzeigers benachbarter Leiter ist dann gering, wenn die Differenz der Phasenwinkel der Stromzeiger der Leiterströme der Leiter möglichst groß ist. Bei der erfindungsgemäßen Anordnung wird ausgenutzt, daß die gegenseitige Beeinflussung der Leiterströme zweier benachbarter Leiter um so geringer ist, je geringer der Summenstromzeiger der Stromzeiger dieser Leiterströme ist. Die durch die Leiterströme verursachten Magnetfelder heben sich in diesem Fall weitgehend gegenseitig auf. Weist die Anordnung beispielsweise sechs Leiter auf, so können die Leiter so angeordnet sein, daß der jeweilige Summenstromzeiger für drei einander benachbarte Leiter einen möglichst geringen Betrag aufweist.

In einer bevorzugten Ausführungsform weist die Anordnung mehrere, insbesondere drei, Leiterpaare auf, die jeweils zur Stromzu- und Stromabführung zu mindestens einer der Wicklungen dienen, wobei die Leiter zur Stromzuführung oder die Leiter zur Stromabführung benachbarter Leiterpaare einander benachbart sind.

Bei einer Anordnung mit drei Leiterpaaren, wie sie üblicherweise für einen Drehstrombetrieb mit drei Phasen vorgesehen ist, wird durch diese Maßnahme sichergestellt, dass die Phasenbeziehung der Stromzeiger in benachbarten Leitern möglichst groß ist. Und zwar betragen die Phasendifferenzen zwischen den Leitern eines Leiterpaares- wie bereits erwähnt - 180° und zwischen den benachbarten Leitern aneinander angrenzenden Leiterpaaren 120°.

In einer vorteilhaften Alternative hierzu wird der Leiter zur Stromzuführung eines Leiterpaars neben dem Leiter zur Stromabführung des benachbarten Leiterpaars angeordnet. Die Phasenbeziehung zwischen den benachbarten Leiterpaaren beträgt in diesem Fall lediglich 60°, was sich - im Vergleich zu der vorgenannten Alternative - nachteilig auf den Effekt der Stromverdrängung auswirkt. Diesem Nachteil steht jedoch der Vorteil einer einfacheren konstruktiven Ausgestaltung gegenüber, insbesondere gestaltet sich hiermit der Anschluß der Leiter an die Wicklungsanordnung vergleichsweise einfach.

Bei dieser Anordnung von sechs Leitern betragen zu einem Zeitpunkt - jeweils bezogen auf einen Bezugsphasenwinkel von 0° - die Phasenwinkel der Stromzeiger der Leiterströme in den Leitern des ersten Leiterpaares 90° und -90°, in den Leitern des zweiten Leiterpaares 150° und -30°, und in den Leitern des dritten Leiterpaares -150° und 30°. Das zweite Leiterpaar ist vorzugsweise zwischen den beiden anderen Leiterpaaren angeordnet, wobei der Leiter mit dem Phasenwinkel +150° dem Leiter mit dem Phasenwinkel -90° des ersten Leiterpaares benachbart ist, und wobei der Leiter mit dem Phasenwinkel -30° dem Leiter mit dem Phasenwinkel -150° des dritten Leiterpaares benachbart ist.

Nach einer weiter bevorzugten Ausgestaltung ist die Anordnung entlang einer Hauptachse gerichtet und weist entlang der Hauptachse voneinander beabstandete Leiterebenen auf. Die Leiter können in den Leiterebenen fertigungstechnisch einfach angeordnet werden; dabei können sich auch mehrere Leiter in einer Leiterebene befinden. Die Leiter sind bei einer solchen Anordnung einfach austauschbar und die Abstände zwischen den Leiterebenen und damit die Abstände zwischen den Leitern können einfach verändert und einzeln zur Erreichung einer geringen Stromverdrängung eingestellt werden.

Bevorzugt weist die Anordnung sechs Leiterebenen auf, wobei in jeder Leiterebene einer der Leiter angeordnet ist. Die Anordnung ist dadurch zum einen für einen Betrieb mit Drehstrom ausgelegt, und eine gegenseitige Beeinflussung der in den Leitern geleiteten Leiterströme ist vermindert, da in jeder Leiterebene nur ein Leiter angeordnet ist.

Bei sechs Leitern und unter Berücksichtigung der beschriebenen gegenseitigen Anordnung folgt, dass das erste Leiterpaar in den Leiterebenen 1 und 2, das zweite Leiterpaar in den Ebenen 3 und 4 und das dritte Leiterpaar in den Ebenen 5 und 6 angeordnet ist. Hierbei ist vorzugsweise wiederum zu berücksichtigen, dass aneinander angrenzende Leiter benachbarter Leiterpaare jeweils zur Stromzu- oder zur Stromabführung dienen, so dass ihre Leiterströme eine Phasendifferenz von 120° aufweisen.

Für eine Anordnung mit einer geraden Anzahl von Leitern und der gleichen Anzahl von Leiterebenen ergeben sich wie folgt erfindungsgemäß weitere Möglichkeiten zur Zuordnung der Leiter zu den Leiterebenen:

Die Leiter werden so in Paare aufgeteilt, daß die zwei Leiter jedes Paares die Leiterströme führen, deren Magnetfelder sich gegenseitig nahezu vollständig aufheben. D.h., daß gemeinsame Magnetfeld der Leiterströme eines solchen Paars weist eine sehr geringe, nahezu verschwindende magnetische Feldstärke auf. Bei den definierten Leiterpaaren ist dies gegeben. Die Leiterebenen der Anordnung werden zu Paarebenen zusammengefaßt, wobei jede Paarebene zwei direkt nebeneinander angeordnete Leiterebenen umfaßt. Die oben genannten weiteren Möglichkeiten werden gewonnen, indem in jeder Paarebene jeweils genau ein Paar angeordnet wird, wobei die Position eines jeden Paars beliebig ist. In jeder Leiterebene einer Paarebene wird dabei jeweils genau ein Leiter des Paars angeordnet; die Position der Leiter des Paars ist jedoch beliebig. Bei sechs Leitern sind diese also zu Paaren, insbesondere zu drei Leiterpaaren, zusammengefaßt.

Weiter bevorzugt weist die Anordnung fünf Leiterebenen auf, wobei in einer der Leiterebenen mehrere, insbesondere zwei, Leiter angeordnet sind. Dadurch ist die Anzahl der Leiterebenen reduziert, wodurch die Ausdehnung der Anordnung verringert ist.

Vorzugsweise sind hierbei zwei Leiter zweier Leiterpaare in einer Leiterebene gemeinsam angeordnet. Es ist besonders zweckdienlich, wenn die beiden Leiter jeweils zur Stromzuführung oder zur Stromabführung zu einer der Wicklungen dienen, da in diesem Fall eine möglichst große Phasendifferenz zu den benachbarten Leitern erreicht ist. Diese Ausgestaltung bietet also den Vorteil, daß eine auftretende Stromverdrängung in den Leitern besonders gering ist.

Nach einer weiter bevorzugten Ausgestaltung überlappen sich die benachbarten Leiter entlang einer Strecke mit einer möglichst großen Länge. Dadurch heben sich die Magnetfelder der Leiterströme in den benachbarten Leitern über die möglichst große Länge weitgehend auf.

Nach einer weiter bevorzugten Ausgestaltung weisen die benachbarten Leiterebenen voneinander jeweils einen Abstand zwischen 70 mm und 100 mm, insbesondere von 80 mm auf. Die Beabstandung der Leiterebenen mit einem solchen Abstand beruht auf der Überlegung, insbesondere bei einer Anordnung für eine große elektrische Maschine, einerseits die Abstände möglichst groß zu wählen, so daß die gegenseitige Beeinflussung der Ströme in den Leiterebenen gering ist und gleichzeitig die Abstände noch so klein zu wählen, daß die Anordnung handhabbar ist. Die Abstände innerhalb des angegebenen Bereichs, sind unter Berücksichtigung der konstruktiven Randbedingungen im Hinblick auf die gegenseitige Beeinflussung der Ströme in den Leitern der Leiterebenen hierfür besonders günstig und zugleich ist die Anordnung gut handhabbar.

Vorzugsweise sind die mit den Wicklungsenden verbundenen Leiter, also die Leiter zur Stromabführung, miteinander kurzgeschlossen. Die Wicklungen sind dadurch auf einfache Weise in Stern geschaltet.

Nach einer weiter bevorzugten Ausgestaltung beträgt das Verhältnis von Leiterumfang zur Leiterquerschnittsfläche zwischen π 1/mm und 30 1/mm. Bei einer solchen Wahl des Verhältnisses hat die zur Verfügung stehende Leiterquerschnittsfläche bei allseitiger Stromverdrängung eine besonders gleichmäßige Stromdichteverteilung. Hierfür ist es günstig, die Oberfläche, und damit den Leiterumfang, möglichst groß zu wählen. Dabei finden selbstverständlich konstruktive Gesichtspunkte Berücksichtigung, da der Leiterumfang nicht beliebig groß wählbar ist.

Durch die in der Zeichnungen dargestellten Ausführungsbeispiele wird die Anordnung näher erläutert. Es zeigen schematisiert und nicht maßstäblich
- FIG 1: einen elektrischen Schaltplan der Anordnung,
- FIG 2: eine Ausgestaltung der Anordnung,
- FIG 3: eine Draufsicht auf die Anordnung gemäß FIG 2,
- FIG 4: einen weiteren Schaltplan für eine weitere Anordnung und
- FIG 5: eine Draufsicht auf die der weiteren Anordnung gemäß FIG 4.

Gleiche Teile sind in den Figuren mit gleichen Bezugszeichen versehen.

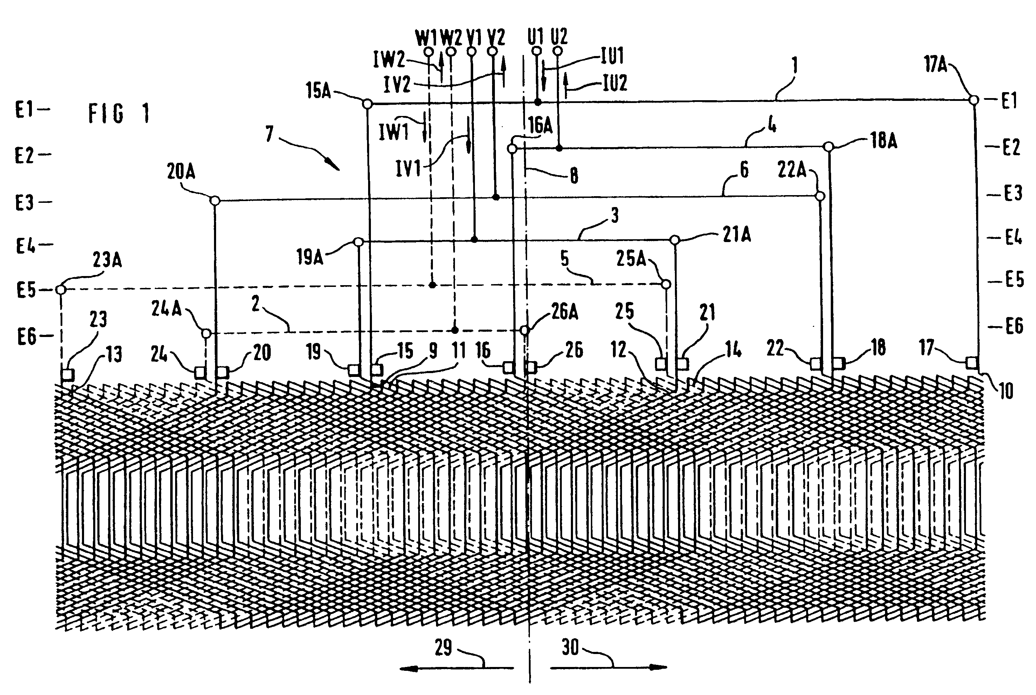

In FIG 1 ist ein Schaltplan einer Anordnung 7 mit sechs Leitern 1 bis 6 dargestellt, die jeweils einen Anschluß U1, bzw. W2, bzw. V1, bzw. U2, bzw. W1, bzw. V2 aufweisen. Die Anordnung 7 ist entlang einer Hauptachse 8 ausgerichtet und weist sechs Leiterebenen E1, E2, E3, E4, E5 und E6 auf, wobei in der Leiterebene E1 der Leiter 1, in der Leiterebene E2 der Leiter 4, in der Leiterebene E3 der Leiter 6, in der Leiterebene E4 der Leiter 3, in der Leiterebene E5 der Leiter 5 und in der Leiterebene E6 der Leiter 2 angeordnet ist.

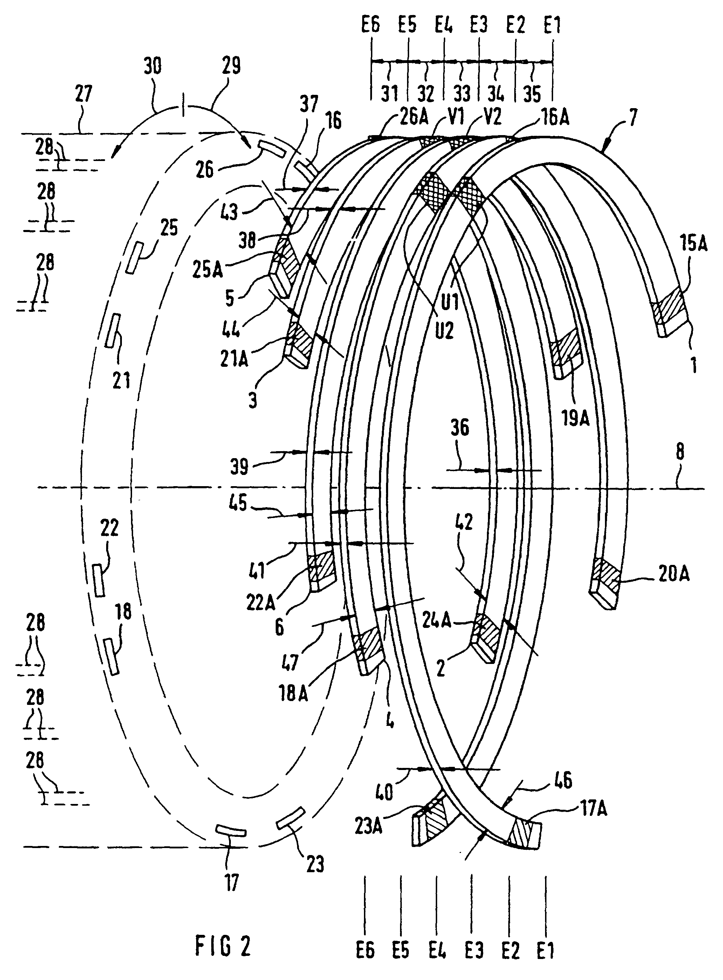

Der Schaltplan zeigt eine entlang der Hauptachse 8 gerichtete Wicklungsanordnung mit einer Abwicklung von sechs Wicklungen 9 bis 14, die entlang des Umfangs eines Stators 27 gemäß FIG 2 angeordnet sind. Die Richtungen 29 und 30 weisen jeweils in Umfangsrichtung und zeigen die Richtung der Abwicklung. Die Wicklung 9 weist den Wicklungsanfang 15 und das Wicklungsende 16, die Wicklung 10 weist den Wicklungsanfang 17 und das Wicklungsende 18, die Wicklung 11 weist den Wicklungsanfang 19 und das Wicklungsende 20, die Wicklung 12 weist den Wicklungsanfang 21 und das Wicklungsende 22, die Wicklung 13 weist den Wicklungsanfang 23 und das Wicklungsende 24 und die Wicklung 14 weist den Wicklungsanfang 25 und das Wicklungsende 26 auf. Jeder Wicklungsanfang und jedes Wicklungsende ist mit einem der Leiter 1 bis 6 verbunden. Durch diese Ausgestaltungen sind die Wicklungen 9 bis 14 außerhalb des Stators 27 und/oder eines Rotors über die Leiter 1 bis 6 beliebig, z.B. in Stern- oder Dreieck-Schaltung, verschaltbar.

Die Wicklungen 9 und 10 sind parallel geschaltet, wobei deren Wicklungsanfänge 15 und 17 über den Leiter 1 und deren Wicklungsenden 16 und 18 über den Leiter 4 elektrisch miteinander verbunden sind. Die Wicklungen 11 und 12 sind ebenfalls parallel geschaltet, wobei deren Wicklungsanfängen 19 und 21 über den Leiter 3 und deren Wicklungsenden 20 und 22 über den Leiter 6 miteinander verbunden sind. Ebenso sind die Wicklungen 12 und 13 parallel geschaltet, wobei deren Wicklungsanfänge 23 und 25 über den Leiter 5 und deren Wicklungsenden 24 und 26 über den Leiter 2 miteinander verbunden sind. Somit ist ein Leiterstrom IU1 über den Anschluß U1 und den Leiter 1 den Wicklungen 9 und 10 zuführbar und aus diesen über den Leiter 4 und den Anschluß U2 ein Leiterstrom IU2 abführbar. Des weiteren ist ein Leiterstrom IV1 über den Anschluß V1 und den Leiter 3 den Wicklungen 11 und 12 zuführbar und aus diesen als Leiterstrom IV2 über den Leiter 6 und den Anschluß V2 abführbar. Ebenso ist den Wicklungen 13 und 14 über den Anschluß W1 und den Leiter 5 ein Leiterstrom IW1 zuführbar und aus den Wicklungen 13 und 14 als Leiterstrom IW2 über den Leiter 2 und den Anschluß W2 abführbar.

Die Anschlüsse U1,V1 und W1 dienen also zur Stromzuführung zu den Wicklungsanfängen 15,17;19,21 und 23,25 und die Anschlüsse U2,V2 und W2 zur Stromabführung von den Wicklungsenden 16,18; 20,22 und 24,26. Die Leiter (z.B. 1) zur Stromzuführung zu einer Wicklung (z.B. 9 und 10) sind jeweils dem Leiter 4 zur Stromabführung von dieser Wicklung 9,10 benachbart, so dass die Phasendifferenz der durch diese beiden Leiter 1,4 fließenden Ströme maximal ist und 180° beträgt. Dadurch ist die Beeinflussung der anderen Leiter (2,3,5,6) im Hinblick auf eine Stromverdrängung möglichst gering gehalten. Die beiden Leiter 1,4 bilden ein Leiterpaar.

Die Wicklungen 9 bis 14 und die Anordnung 7 sind für einen Drehstrombetrieb innerhalb eines Betriebsfrequenzbereiches Δf, beispielsweise 40 Hz bis 70 Hz, ausgelegt. Die Stromzeiger IU1, IU2, IV1, IV2, IW1 und IW2 der Leiterströme IU1, IU2, IV1, IV2, IW1 und IW2 weisen jeweils einen zugeordneten Phasenwinkel ΦU1, ΦU2, ΦV1, ΦV2, ΦW1 und ΦW2 auf, die bezogen auf 0° als Bezugsphasenwinkel zu einem Zeitpunkt tₒ ΦU1 = 90°, ΦU2 = - 90°, ΦV1 = - 30°, ΦV2 = 150°, ΦW1 = - 150° und ΦW2 = 30° betragen. Es sind also im Ausführungsbeispiel drei einander benachbarte Leiterpaare (1,4); (6,3); (5,2) zur jeweiligen Stromzu- und Stromabführung zu jeweils zwei Wicklungen (9,10); (11,12); (13,14) vorgesehen.

Dadurch, daß die Leiter 1 bis 6 in den Ebenen E1 bis E6 wie beschrieben angeordnet sind, sind die Beträge der Differenzen der Phasenwinkel der Summenzeiger von Leiterströmen in direkt benachbarten Leitern möglichst groß. Zwischen den Leitern (z.B.1,4) eines Leiterpaares beträgt diese Phasendifferenz jeweils 180° und zwischen den einander benachbarten Leiterpaaren (1,4); (6,3); (5,2) beträgt diese Phasendifferenz bei der Anordnung gemäß FIG 1 120°. Hierbei sind die Leiter (z.B.4,6) zur Stromabführung zweier benachbarter Leiterpaare (1,4 und 6,3) einander benachbart. Der Leiter 4 zur Stromabführung des erste Leiterpaares (1,4) ist also dem Leiter 6 zur Stromabführung des zweiten Leiterpaares (3,6) benachbart. Damit ist bei einer Drehstrom-Anordnung eine möglichst große Phasendifferenz zwischen allen benachbarten Leitern (1 bis 6) erreicht. Eine möglichst große Phasendifferenz ist gleichbedeutend damit, daß der Betrag der Summenzeiger benachbarter Leiter (1,4); (4,6); (6,3); (3,5); (5,2) möglichst klein ist. Wie bereits erwähnt, ist der Betrag der Differenz der Phasenwinkel der Stromzeiger (z.B. IU1 und IU2) der Leiter (1,4) eines Leiterpaares 180°; damit ist der Betrag des Summenstromzeigers des Leiterpaars (1,4) gebildet durch Summierung der Stromzeiger IU1 und IU2 der Leiterströme IU1 und IU2 gleich Null. Gleiches gilt analog für die beiden anderen Leiterpaare (6,3) und (5,2).

Die Stromverdrängung in den Leitern 1 bis 6 ist durch deren erfindungsgemäße Anordnung wirksam verringert und damit sind elektrischen Verluste in den Leitern 1 bis 6 reduziert. Die Reduzierung der Stromverdrängung in den Leitern 1 bis 6 kann auch erreicht werden, wenn der Leiter 6 in der Leiterebene E4 und der Leiter 3 in der Leiterebene E3 angeordnet ist. Dies bedeutet, dass bei benachbarten Leiterpaaren (z.B. 1,4 und 6,3) der Leiter 4 zur Stromabführung des einen Leiterpaares (1,4) dem Leiter 3 zur Stromzuführung des anderen Leiterpaares (6,3) benachbart ist. Bei einer Drehstrom-Anordnung ist damit ein Phasendifferenz zischen den Leiterpaaren (1,4) und (3,6), also zwischen den Leitern 4 und 3, von 60° erreicht.

In FIG 2 ist dreidimensional eine Ausführung der Anordnung 7 dargestellt. Die Wicklungen 9 bis 14 sind dabei gemäß der FIG 1 entlang des Umfangs eines Stators 27 einer nicht näher dargestellten elektrischen Rotationsmaschine angeordnet. Die Richtungen 29 und 30 weisen dabei gemäß FIG 1 in Umfangsrichtung. Am Stator 27 sind die Wicklungsanfänge 17, 21, 23 und 25 sowie die Wicklungsenden 16, 18, 22 und 26 zur besseren Übersichtlichkeit nur angedeutet. Die Wicklungsanfänge 15 und 19 so wie die Wicklungsenden 20 und 24 sind nicht sichtbar. Die Leiter 1 bis 6 befinden sich gemäß der FIG 1 jeweils in einer der Leiterebenen E1 bis E6. Die Leiter 1 bis 6 weisen jeweils ein rechteckiges Profil mit einer jeweiligen Breite 40, bzw. 36, bzw. 38, bzw. 41, bzw. 37, bzw. 39 und eine jeweilige Höhe 46, bzw. 42, bzw. 44, bzw. 47, bzw. 43, bzw. 45 auf. Aus Gründen der Übersichtlichkeit sind nur die Kontaktstellen 15A bis 26A auf den Leitern 1 bis 6 gezeigt, an denen die Leiter 1 bis 6 (gemäß FIG 1) mit den Wicklungsanfängen 15, 17, 19, 21, 23 und 25 sowie der Wicklungsenden 16, 18, 20, 22, 24 und 26 verschaltet sind.

Benachbarte Leiterebenen (E1,E2); (E2,E3); (E3,E4); (E4,E5); (E5,E6); sind jeweils mit einem jeweiligen Abstand 31 bis 35 von 80 mm beabstandet. Dadurch ist eine gegenseitige Beeinflussung von Leiterströmen, die durch benachbarte Leiter geleitet sind, gering ist. Je nach Auslegung der Abmessungen der elektrischen Rotationsmaschine sind die Abstände 31 bis 35 so wählbar, daß die auftretenden Verluste in Folge der Stromverdrängung gering sind.

Ebenso ist die jeweilige Leiterquerschnittsfläche, die sich aus der jeweiligen Höhe 46, 42, 44, 47, 43 oder 45 und Breite 40, 36, 38, 41, 37 oder 39 jedes Leiters ergibt, so wählbar, daß das jeweilige Verhältnis des Leiterumfangs zu der vom Leiterumfang umrandeten Leiterquerschnittsfläche möglichst groß ist. Selbstverständlich ist die Wahl der Höhe 46, 42, 44, 47, 43 oder 45 und der Breite 40, 36, 38, 41, 37 oder 39 eines Leiters 1 bis 6 unter Berücksichtigung der Abmessungen der elektrischen Rotationsmaschine zu wählen. Insbesondere ist die Höhe 46, 42, 44, 47, 43 oder 45 der Leiter 1 bis 6 in Richtung zur Hauptachse 8 beispielsweise durch eine nicht dargestellte, sich entlang der Hauptachse 8 erstreckende Welle der Rotationsmaschine oder andere, nicht näher dargestellte Wicklungsbauteile begrenzt. Das Verhältnis von Leiterumfang zur Leiterquerschnittsfläche ist hier zwischen π 1/mm und 30 1/mm gewählt.

Die Anordnung der Leiter 1 bis 6 in den Leiterebenen E1 bis E6 bietet eine konstruktiv einfache Leiterführung und zusätzlich sind die Leiter 1 bis 6 einfach vertauschbar. Der Abstützung der Leiter 1 bis 6 dienende Mittel sind aus Gründen der Übersichtlichkeit in FIG 2 nicht dargestellt.

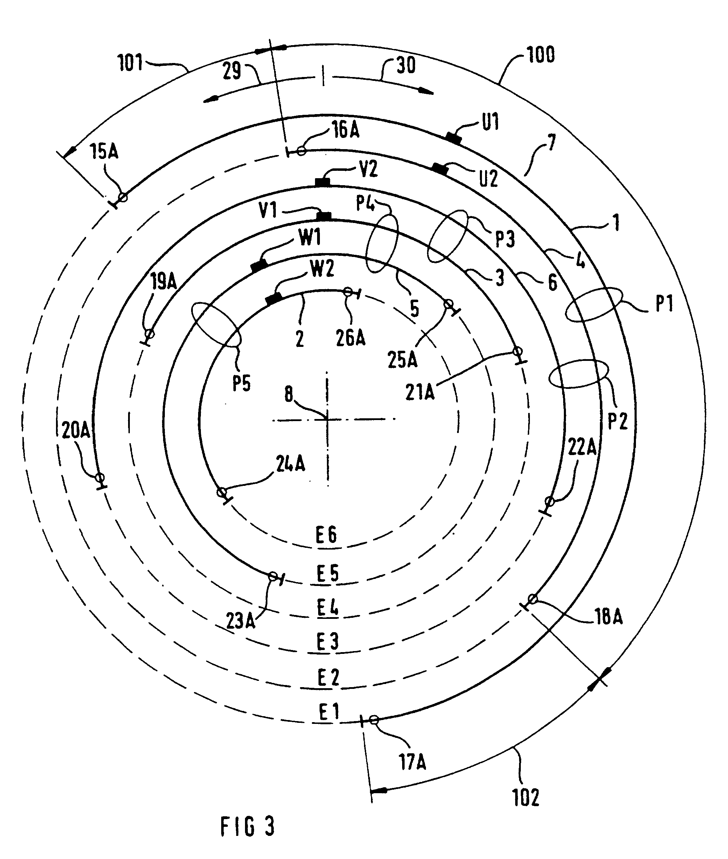

In FIG 3 ist stark schematisiert eine Draufsicht auf die Anordnung 7 entlang der Hauptachse 8 in Richtung zur Ebene 1 dargestellt. Der FIG 3 ist entnehmbar, wie sich die Leiter 1 bis 6 jeweils entlang eines jeweiligen Kreisumfangs erstrekken. Zur besseren Übersichtlichkeit sind die Ebenen E1 bis E6 ineinander und nicht hintereinander dargestellt. Benachbarte Leiter bilden jeweils ein Paar, und zwar bilden die Leiter 1 und 4 das Paar P1, die Leiter 4 und 6 das Paar P2, die Leiter 6 und 3 das Paar P3, die Leiter 3 und 5 das Paar P4, und die Leiter 5 und 2 bilden das Paar P5.

Die Leiter 1 bis 6 jedes der Paare P1, P2, P3, P4, P5 sind so ausgeführt, daß der jeweilige Umfangsbereich, über den sich die einem Paar zugeordneten Leiter gemeinsam erstrecken, möglichst groß ist. Mit anderen Worten, die Leiter (z.B. 1,4) eines Paares P1 überlappen sich entlang des Umfangs über eine Strecke mit einer möglichst großen Länge. Die Magnetfelder der Leiterströme jedes Paars heben sich somit entlang des jeweiligen Umfangsbereichs, bzw. entlang der jeweiligen gemeinsamen Strecke der Leiter 1,4 des Paars P1 weitgehend gegenseitig auf. Beispielsweise erstrecken sich die Leiter 1 und 4 des Paares P1 gemeinsam entlang des Umfangsbereichs 100. Die Umfangsbereiche 101 und 102 werden zwar nur von einem Leiter des Paars P1, nämlich vom Leiter 1, überstrichen, und das Magnetfeld des im Leiter 1 fließenden Leiterstromes kann auf die Ströme in den Leitern 6,3,5 und 2 wirken; jedoch ist diese Wirkung allenfalls gering, da die Umfangsbereiche 101 und 102 erfindungsgemäß sehr klein sind. Idealer Weise würden die Leiter 1 bis 6 so ausgebildet sein, daß sie alle einen gleichen Umfangsbereich überstreichen. Hierdurch wäre eine gegenseitige Beeinflussung der Magnetfelder der Leiterströme weitestgehend verringert. Im allgemeinen ist aus konstruktiven Gründen eine solche Ausführung der Leiter schwierig, wenn nicht unmöglich.

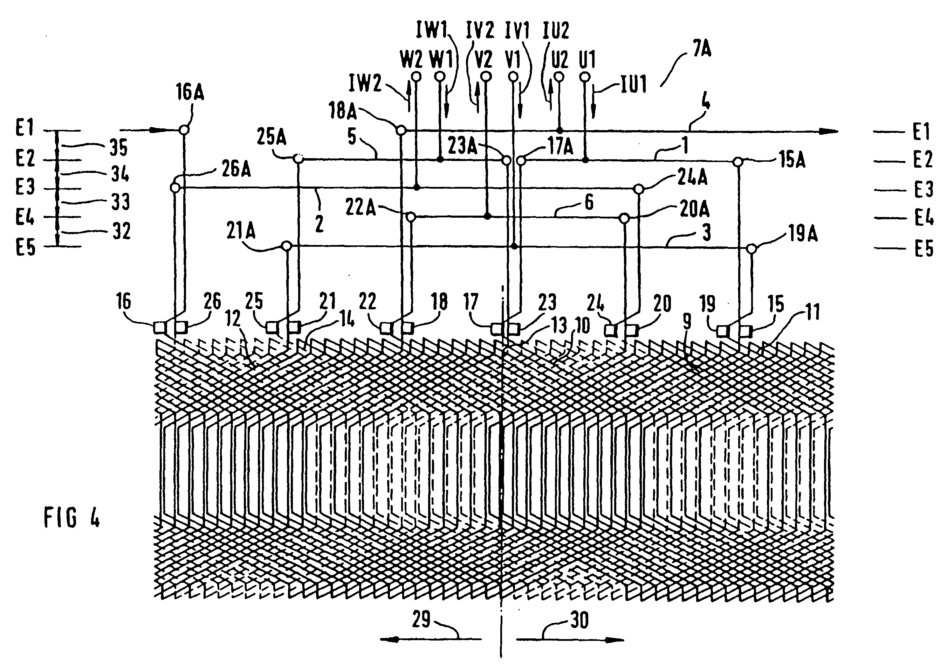

In FIG 4 ist ein Schaltplan für eine Anordnung 7A mit fünf Leiterebenen E1 bis E5 dargestellt. Die Anordnung 7A ist mit den Wicklungen 9 bis 14 und deren Wicklungsanfängen 15, 17, 19, 21, 23 und 25 sowie deren Wicklungsenden 16, 18, 20, 22, 24 und 26 verbunden. Im Unterschied zu FIG 1 weist die Anordnung 7A nur fünf Leiterebenen E1 bis E5 auf. Dadurch können bei der Anordnung 7A die Abstände 33 bis 35 zwischen den Leiterebenen E1 bis E5 größer gewählt werden als bei der Anordnung 7 gemäß der FIG 1 bis FIG 3, wenn beide Anordnungen 7 und 7A eine gleiche Abmessung in Hauptachsenrichtung aufweisen. Dadurch ist vorteilhaft die gegenseitige Beeinflussung der in den Leiterebenen E1 bis E5 angeordneten Leiter 1 bis 6 vermindert.

Unter Berücksichtigung der Phasenwinkel (analog wie zu FIG 1 beschrieben) der Stromzeiger IU1, IU2, IV1, IV2, IW1 und IW2 der in den Leitern 1 bis 6 geleiteten Leiterströme IU1, IU2, IV1, IV2, IW1 und IW2 sind die Leiter 1 bis 6 so angeordnet, daß eine geringe gegenseitige Beeinflussung und damit eine geringe Stromverdrängung in den Leitern 1 bis 6 erreicht ist. Dabei ist in der Leiterebene E1 der Leiter 4, sind in der Leiterebene E2 der Leiter 1 und der Leiter 5, ist in der Leiterebene E3 der Leiter 2, ist in der Leiterebene E4 der Leiter 6 und ist in der fünften Leiterebene E5 der Leiter 3 angeordnet.

Bei einer derartigen Anordnung ist gewährleistet, dass die Leiter (z.B. 4,1 und 5,2) der einzelnen Leiterpaare (4,1); (5,2) zur Stromzu- und Stromabführung zu einer jeweiligen Wicklung (z.B. 9,10 bzw. 13,14) direkt benachbart sind. In der mit zwei Leitern belegten Leiterebene E2 sind demnach Leiter 1,5 zweier benachbarter Leiterpaare (1,4);(5,2) angeordnet. In der FIG 4 dienen die beiden in der Leiterebene E2 angeordneten Leiter 5,1 jeweils zur Stromzufuhr über die Anschlüsse W1 bzw. U1. Dies führt zu einer Phasendifferenz von 60° zwischen den Leitern 4 und 5 sowie zwischen den Leitern 1 und 2. Wird der Leiter 2 anstatt des Leiters 5 in der Leiterebene E2 gemeinsam mit dem Leiter 1 angeordnet, so beträgt die Phasendifferenz zwischen den dann benachbarten Leitern 4,2 und 1,5 jeweils 120°, was im Hinblick auf das Problem der Stromverdrängung günstiger ist. In diesem Fall werden die Leiter 6 und 3 ebenfalls bezüglich ihrer Anordnung in den Leiterebenen E4 und E5 vertauscht, um eine Phasendifferenz zwischen den dann benachbarten Leitern 3 und 5 von 120° zu erreichen.

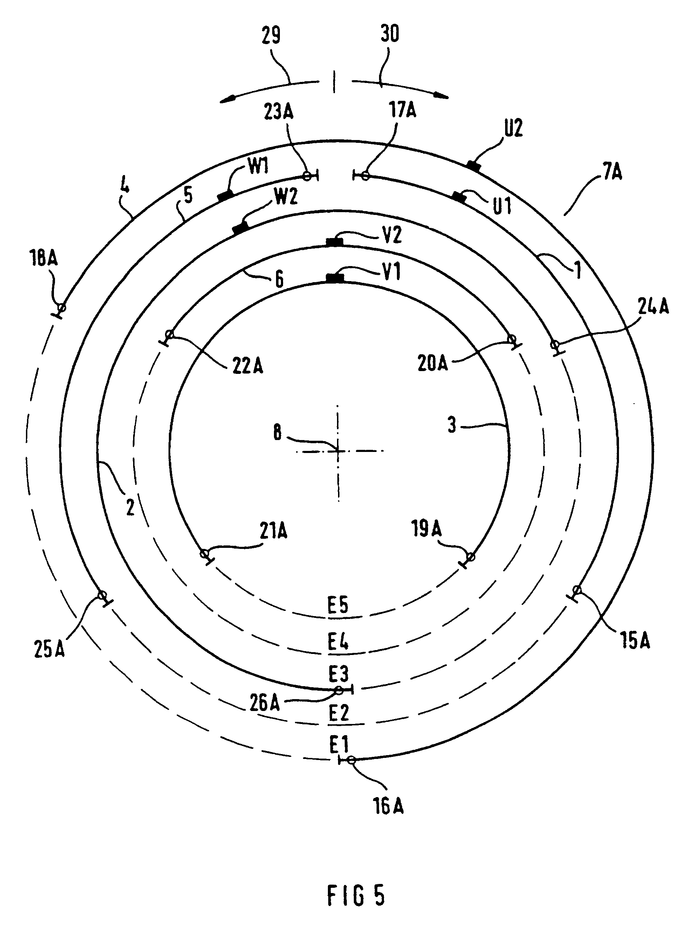

In FIG 5 ist analog zur FIG 3 eine Draufsicht auf die Anordnung 7A entlang der Hauptachse 8 von der Leiterebene E6 in Richtung zur Ebene E1 dargestellt. Der FIG 5 ist entnehmbar wie sich jeder Leiter 1 bis 6 entlang eines jeweiligen Kreisumfangs erstreckt. Eine dreidimensionale Ausgestaltung der Anordnung 7A könnte analog zu der in FIG 2 dargestellten Ausgestaltung der Anordnung 7 ausgeführt sein, wobei allerdings hier die Leiterebene E6 entfiele und in der Leiterebene E2 die beiden Leiter 1 und 5 angeordnet sind.

## Patentansprüche

1. Leiteranordnung (7) mit einer Mehrzahl von elektrischen Leitern (1-6) zur Stromzuführung und zur Stromabführung zu einer mehrere Wicklungen (9-14) aufweisenden Wicklungsanordnung einer elektrischen Maschine, insbesondere Generator, wobei der Leiter (1) zur Stromzuführung und der Leiter (4) zur Stromabführung zu einer jeweiligen Wicklung (9,10) ein Leiterpaar (1,4) bilden und einander benachbart sind, so dass der Betrag der Differenz der Phasenwinkel (ΦU1;ΦU2) der Stromzeiger (IU1;IU2) des Leiterpaares (1,4) möglichst groß ist, und insbesondere 180° beträgt.

2. Anordnung (7) nach Anspruch 1, bei der die Leiter (1 bis 6) so angeordnet sind, daß der Betrag der Differenz der Phasenwinkel (ΦU1, ΦU2, ΦV1, ΦV2, ΦW1, ΦW2) der Stromzeiger (IU1, IU2, IV1, IV2, IW1, IW2) von direkt benachbarten Leitern (1,4); (4,6); (6,3); (3,5); (5,2) möglichst groß ist.

3. Anordnung (7) nach Anspruch 1 oder 2, mit mehreren Leiterpaaren (1,4);(6,3);(5,2), die jeweils zur Stromzu- und - abführung zu mindestens einer der Wicklungen (9,10);(11,12); (13,14) dienen, wobei die Leiter (1,3,5) zur Stromzuführung oder die Leiter (2,4,6) zur Stromabführung benachbarter Leiterpaare (1,4);(6,3);(5,2) einander benachbart sind.

4. Anordnung (7) nach Anspruch 1 oder 2, mit mehreren Leiterpaaren (1,4); (6,3); (5,2), die jeweils zur Stromzu- und - abführung zu mindestens einer der Wicklungen (9,10);(11,12); (13,14) dienen, wobei bei benachbarter Leiterpaaren (1,4); (6,3); (5,2) jeweils der Leiter (3) zur Stromzuführung des einen Leiterpaars (6,3) dem Leiter (4) zur Stromabführung des benachbarten Leiterpaars (1,4) benachbart ist.

5. Anordnung (7) nach einem der vorhergehenden Ansprüche, die entlang einer Hauptachse (8) gerichtet ist, und bei der die Leiter (1-6) in entlang der Hauptachse (8) voneinander beabstandeten Leiterebenen (E1,E2,E3,E4,E5,E6) angeordnet sind.

6. Anordnung (7) nach Anspruch 5, die sechs Leiterebenen (E1,E2,E3,E4,E5,E6) aufweist, wobei in jeder Leiterebene (E1,E2,E3,E4,E5,E6) einer der Leiter (1 - 6) angeordnet ist.

7. Anordnung (7A), nach Anspruch 5, die fünf Leiterebenen (E1,E2,E3,E4,E5) aufweist, wobei in einer der Leiterebenen (E2) zwei Leiter (1,5) angeordnet sind.

8. Anordnung (7A) nach Anspruch 5, bei der zwei Leiter (1,5) zweier Leiterpaare (1,4);(5,2) in einer Leiterebene (E2) gemeinsam angeordnet sind.

9. Anordnung (7A) nach Anspruch 8, bei der die beiden Leiter (1,5) jeweils zur Stromzuführung oder zur Stromabführung zu einer der Wicklungen (9,10;13,14) dienen.

10. Anordnung (7) nach einem der Ansprüche 5 bis 9, bei der benachbarte Leiter (1,4); (4,6); (6,3); (3,5); (5,2) sich entlang einer Strecke mit einer möglichst großen Länge überlappen.

11. Anordnung (7) nach einem der Ansprüche 5 bis 10, wobei die direkt benachbarten Leiterebenen (E1,E2);(E2,E3);(E3,E4); (E4,E5);(E5,E6) jeweils einen Abstand (31 bis 35) voneinander zwischen 70 mm und 100 mm, insbesondere von 80 mm, aufweisen.

12. Anordnung (7) nach einem der vorhergehenden Ansprüche, bei der die Leiter (2,4,6)zur Stromabführung miteinander kurzgeschlossen sind.

13. Anordnung (7) nach einem der vorhergehenden Ansprüche, wobei für jeden Leiter (1 - 6) das Verhältnis von Leiterumfang zur Leiterquerschnittsfläche zwischen π 1/mm und 30 1/mm.

## Claims

1. Conductor arrangement (7) having a number of electrical conductors (1-6) for carrying power to, and away from, a winding arrangement, which has a number of windings (9-14), in an electrical machine, in particular a generator, with the conductor (1) for carrying power to and the conductor (4) for carrying power away from a respective winding (9, 10) forming a conductor pair (1, 4) and being adjacent to one another, so that the magnitude of the difference between the phase angles (φU1; φU2) of the current vectors (IU1;IU2) of the conductor pair (1, 4) is as large as possible and, in particular, is 180°.

2. Arrangement (7) according to Claim 1, in which the conductors (1 to 6) are arranged such that the magnitude of the difference between the phase angles (φU1, φU2, φV1, φV2, φW1, φW2) of the current vectors (IU1, IU2, IV1, IV2, IW1, IW2) of directly adjacent conductors (1,4); (4,6);(6,3); (3,5);(5,2) is as large as possible.

3. Arrangement (7) according to Claim 1 or 2, having a number of conductor pairs (1,4);(6,3);(5,2), which are each used for carrying power to and away from at least one of the windings (9,10);(11,12);(13,14), with the conductors (1, 3, 5) for carrying power to the windings or the conductors (2, 4, 6) for carrying power away from the windings in adjacent conductor pairs (1,4);(6,3);(5,2) being adjacent to one another.

4. Arrangement (7) according to Claim 1 or 2, having a number of conductor pairs (1,4);(6,3);(5,2) which are each used for carrying power to and away from at least one of the windings (9,10);(11,12);(13,14) with, in the case of adjacent conductor pairs (1,4);(6,3);(5,2), that conductor (3) which carries power to the windings in the one conductor pair (6, 3) in each case being adjacent to that conductor (4) which carries power away from the windings in the adjacent conductor pair (1, 4).

5. Arrangement (7) according to one of the preceding claims, which is directed along a major axis (8), and in which the conductors (1-6) are arranged in conductor planes (E1,E2,E3,E4,E5,E6) which are at a distance from one another along the major axis (8).

6. Arrangement (7) according to Claim 5, which has six conductor planes (E1,E2,E3,E4,E5,E6), with one of the conductors (1-6) being arranged in each conductor plane (E1,E2,E3,E4,E5,E6).

7. Arrangement (7A) according to Claim 5, which has five conductor planes (E1,E2,E3,E4,E5) with two conductors (1, 5) being arranged in one of the conductor planes (E2).

8. Arrangement (7A) according to Claim 5, in which two conductors (1, 5) in two conductor pairs (1,4);(5,2) are arranged jointly in one conductor plane (E2).

9. Arrangement (7A) according to Claim 8, in which the two conductors (1, 5) are respectively used for carrying power to or away from one of the windings (9,10;13,14).

10. Arrangement (7) according to one of Claims 5 to 9, in which adjacent conductors (1,4);(4,6);(6,3);- (3,5);(5,2) overlap over as great a length as possible along one section.

11. Arrangement (7) according to one of Claims 5 to 10, with the directly adjacent conductor planes (E1,E2);(E2,E3);(E3,E4);(E4,E5);(E5,E6) each being at a distance (31 to 35) of between 70 mm and 100 mm, in particular of 80 mm, from one another.

12. Arrangement (7) according to one of the preceding claims, in which the conductors (2, 4, 6) for carrying power away from the windings are shortcircuited to one another.

13. Arrangement (7) according to one of the preceding claims, with the ratio of the conductor circumference to the conductor cross-sectional area being between π mm⁻¹ and 30 mm⁻¹ for each conductor (1 - 6).

## Revendications

1. Dispositif conducteur (7) comportant plusieurs conducteurs électriques (1 à 6) pour l'amenée de courant et pour l'évacuation de courant d'un dispositif à enroulements, comportant plusieurs enroulements (9 à 14), d'une machine électrique, notamment d'une génératrice, dans lequel le conducteur (1) pour l'amenée de courant et le conducteur (4) pour l'évacuation de courant pour un enroulement respectif (9, 10) forment une paire de conducteurs (1, 4) et sont voisins l'un de l'autre de telle sorte que la valeur absolue de la différence des angles de phases (ΦU1 ; ΦU2) des vecteurs de courants (IU1 ; IU2) de la paire de conducteurs (1, 4) est la plus grande possible et vaut notamment 180°.

2. Dispositif (7) selon la revendication 1, dans lequel les conducteurs (1 à 6) sont disposés de telle sorte que la valeur absolue de la différence des angles de phases (ΦU1, ΦU2, ΦV1, ΦV2, ΦW1, ΦW2) des vecteurs de courants (IU1, IU2, IV1, IV2, IW1, IW2) de conducteurs directement voisins (1, 4) ; (4, 6) ; (6, 3) ; (3, 5) ; (5, 2) est la plus grande possible.

3. Dispositif (7) selon la revendication 1 ou 2, avec plusieurs paires de conducteurs (1, 4) ; (6, 3) ; (5, 2) qui servent respectivement à l'amenée et à l'évacuation de courant pour au moins l'un des enroulements (9, 10) ; (11, 12) ; (13, 14), dans lequel les conducteurs (1, 3, 5) pour l'amenée de courant ou les conducteurs (2, 4, 6) pour l'évacuation de courant de paires de conducteurs voisines (1, 4) ; (6, 3) ; (5, 2) sont voisins les uns des autres.

4. Dispositif (7) selon la revendication 1 ou 2, avec plusieurs paires de conducteurs (1, 4) ; (6, 3) ; (5, 2) qui servent respectivement à l'amenée et à l'évacuation de courant d'au moins l'un des enroulements (9, 10) ; (11, 12) ; (13, 14), dans lequel, pour des paires de conducteurs (1, 4) ; (6, 3) ; (5, 2) voisines, respectivement le conducteur (3) pour l'amenée de courant d'une paire de conducteurs (6, 3) est voisin du conducteur (4) pour l'évacuation de courant de la paire de conducteurs (1, 4) voisine.

5. Dispositif (7) selon l'une des revendications précédentes, qui est orienté le long d'un axe principal (8) et dans lequel les conducteurs (1 à 6) sont disposés dans des plans de conducteurs (E1, E2, E3, E4, E5, E6) distants les uns des autres le long de l'axe principal (8).

6. Dispositif (7) selon la revendication 5, qui comporte six plans de conducteurs (E1, E2, E3, E4, E5, E6) et dans lequel l'un des conducteurs (1 à 6) est disposé dans chaque plan de conducteur (E1, E2, E3, E4, E5, E6).

7. Dispositif (7A) selon la revendication 5, qui comporte cinq plans de conducteurs (E1, E2, E3, E4, E5) et dans lequel deux conducteurs (1, 5) sont disposés dans l'un des plans de conducteurs (E2).

8. Dispositif (7A) selon la revendication 5, dans lequel deux conducteurs (1, 5) de deux paires de conducteurs (1, 4) ; (5, 2) sont disposés ensemble dans un plan de conducteur (E2).

9. Dispositif (7A) selon la revendication 8, dans lequel les deux conducteurs (1, 5) servent respectivement à l'amenée de courant ou à l'évacuation de courant d'un des enroulements (9, 10 ; 13, 14).

10. Dispositif (7) selon l'une des revendications 5 à 9, dans lequel des conducteurs voisins (1, 4) ; (4, 6) ; (6, 3) ; (3, 5) ; (5, 2) se chevauchent le long d'un tronçon ayant la longueur la plus grande possible.

11. Dispositif (7) selon l'une des revendications 5 à 10, dans lequel les plans de conducteurs directement voisins (E1, E2) ; (E2, E3) ; (E3, E4) ; (E4, E5) ; (E5, E6) ont à chaque fois une distance (31 à 35) les uns aux autres qui est comprise entre 70 mm et 100 mm, notamment 80 mm.

12. Dispositif (7) selon l'une des revendications précédentes, dans lequel les conducteurs (2, 4, 6) pour l'évacuation de courant sont court-circuités entre eux.

13. Dispositif (7) selon l'une des revendications précédentes, dans lequel, pour chaque conducteur (1 à 6), le rapport de la circonférence de conducteur à la surface transversale de conducteur est compris entre π 1/mm et 30 1/mm.
